# EUROPEAN PATENT APPLICATION

(11) **EP 3 187 982 A1**
(43) Date of publication of application: **05.07.2017**
(21) Application number: 14882798.3
(22) Date of filing: 11.10.2014
(51) Int. Cl.: G06F 3/041

(54) **DISPLAY DEVICE, ELECTRONIC DEVICE AND DRIVING METHOD**

(30) Priority: 29.08.2014 CN 201410437105
(71) Applicant: BOE Technology Group Co., Ltd., Beijing 100015 (CN); Beijing BOE Optoelectronics Technology Co., Ltd., Beijing 100176 (CN)
(72) Inventor: XIE, Xiaobo, Beijing 100176 (CN); LIU, Jinshan, Beijing 100176 (CN); XIONG, Jun, Beijing 100176 (CN); SHI, Lingyun, Beijing 100176 (CN)
(74) Representative: Isarpatent
(86) International application number: PCT/CN2014/088413
(87) International publication number: WO 2016/029533

(57) **Abstract**

The present disclosure provides a display apparatus including: a touch display region; a display driving module, configured to load a display driving signal to a first subregion of the touch display region, so as to enable the first subregion to be in a displaying state; a trigger signal generation module, configured to generate a trigger signal when the display driving module loads the display driving signal to the first subregion of the touch display region; and a touch driving signal generation module, configured to load a touch driving signal to touch driving electrodes in each of the other one or more subregions except the first subregion of the touch display region based on the received trigger signal, so that each of the other one or more regions is in a touch detection state while the first subregion is in the displaying state.

## Description

### CROSS REFERENCE OF RELATED APPLICATION

The present application claims the priority of Chinese patent application No. 201410437105.3 filed on August 29, 2014, the disclosure of which is incorporated herein by reference.

### TECHNICAL FIELD

The present disclosure relates to the field of display technology, in particular to a display apparatus, an electronic apparatus and a driving method.

### BACKGROUND

With progress of technology, touch screens have gradually taken place of conventional keyboards and become a new generation of input apparatuses. Based on their working principles, the touch screens may include various types, such as a resistive touch screen, a capacitive touch screen, a surface acoustic wave touch screen, and an infrared touch screen. Currently, the resistive touch screen and the capacitive touch screen are commonly used.

In an in-cell touch screen, the touch screen and a liquid crystal display (LCD) may be integrated. As a result, both cost and thickness of the module may be reduced, and transmissivity may be improved. Thus, the in-cell touch screen has become a most widely used type of touch screens.

At present, an extensively adopted method for driving the in-cell touch screen is V-Blank, wherein one part of a display time cycle (for example, a time cycle for displaying one frame of image) is for touch detection, and the other part of the display time cycle is for displaying. In such manner of driving by time division, the displaying and the touch detection are implemented respectively, and do not affect each other.

However, as the size of the touch screen continues to increase and the resolution becomes higher and higher, the time period reserved for touch detection becomes less and less while ensuring the display quality, which may be even shorter than a necessarily required time period for touch detection. Therefore, the touch detection of the touch display screen may be severely deteriorated.

### SUMMARY

### (1) TECHNICAL PROBLEMS TO BE SOLVED

In the present disclosure, it is provided a display apparatus, an electronic apparatus and a driving method for solving the problem of insufficient time period for the touch detection of the large-scaled touch display screen. Thus, the touch detection may operate properly, while the display quality of the touch display apparatus is ensured.

### (2) TECHNICAL SOLUTIONS

In one aspect of the present disclosure, it is provided a display apparatus, including:
a touch display region;
a display driving module, configured to load a display driving signal to a first subregion of the touch display region, so as to enable the first subregion to be in a displaying state, wherein the first subregion is one of at least two subregions obtained by dividing the touch display region;
a trigger signal generation module, configured to generate a trigger signal when the display driving module loads the display driving signal to the first subregion of the touch display region, wherein the trigger signal includes information on the first subregion; and
a touch driving signal generation module, configured to load a touch driving signal to touch driving electrodes in each of the other one or more subregions except the first subregion of the touch display region based on the received trigger signal, so that each of the other one or more regions is in a touch detection state while the first subregion is in the displaying state.

Alternatively, the display driving module loads the display driving signal to the first subregion of the touch display region during a time period for scanning one frame of image, so as to enable the first subregion to be in the displaying state; and
the touch driving signal generation module loads the touch driving signal to the touch driving electrodes in each of the other one or more subregions except the first subregion of the touch display region based on the received trigger signal during the time period for scanning one frame of image, so that each of the other one or more regions is in the touch detection state while the first subregion is in the displaying state.

Alternatively, the touch display region includes a first subregion and a second subregion; during a first stage of the time period for scanning one frame of image, the display driving module loads a first display driving signal to the first subregion, the trigger signal generation module generates a first touch signal when the display driving module loads the first display driving signal to the first subregion, the first trigger signal includes information on the first subregion, and the touch driving signal generation module loads the first touch driving signal to the touch driving electrodes in the second subregion based on the received first trigger signal; and during a second stage of the time period for scanning one frame of image, the display driving module loads a second display driving signal to the second subregion, the trigger signal generation module generates a second touch signal when the display driving module loads the second display driving signal to the second subregion, the second trigger signal includes information on the second subregion, and the touch driving signal generation module loads the second touch driving signal to the touch driving electrodes in the first subregion based on the received second trigger signal, wherein the first stage of the time period and the second stage of the time period adjoin each other and together form the time period for scanning one frame of image.

Alternatively, when the other one or more subregions are a plurality of subregions, the touch driving signal generation module loads the touch driving signal to the touch driving electrodes in the plurality of subregions synchronously.

Alternatively, the display apparatus further includes a plurality of gate lines, pixel electrodes and a common electrode within the touch display region; and the display driving module includes a gate driving signal generation unit, a pixel electrode driving signal generation unit and a common electrode driving signal generation unit, wherein the gate driving signal generation unit generates a gate driving signal, loads the generated gate driving signal to a corresponding gate line, and is connected to the corresponding gate line; the pixel electrode driving signal generation unit generates a pixel electrode driving signal, loads the generated pixel electrode driving signal to a corresponding pixel electrode, and is connected to the corresponding pixel electrode; and the common electrode signal generation unit generates a common electrode signal, loads the generated common electrode signal to the common electrode, and is connected to the common electrode.

Alternatively, the display apparatus further includes: a first substrate, a second substrate and touch sensing electrodes arranged on the first substrate and interact with the touch driving electrodes to implement the touch detection, wherein, the touch driving electrodes are arranged on the second substrate, and intersected with and insulated from the touch sensing electrodes.

Alternatively, the touch sensing electrodes include a plurality of strip-shaped electrodes arranged in a horizontal direction and in parallel; the touch driving electrodes include a plurality of electrodes arranged in a longitudinal direction and in parallel, each of which consists of a plurality of block-shaped electrodes connected electrically.

Alternatively, all of the gate lines, the pixel electrodes and the common electrode are arranged on the second substrate.

Alternatively, the second substrate further includes: data lines; and a shielding layer arranged between the touch driving electrodes and the data lines.

Alternatively, the touch driving electrodes in different subregions are connected to a same touch driving signal generation module.

Alternatively, the touch driving electrodes in different subregions are connected to different touch driving signal generation modules.

Alternatively, the display apparatus is an in-cell touch display apparatus.

In another aspect of the present disclosure, it is provided an electrical apparatus including at least one of the above display apparatuses.

In another aspect of the present disclosure, it is provided a method for driving the above display apparatus including the touch display region; the method includes:
loading a display driving signal to a first subregion of the touch display region, so as to enable the first subregion to be in a displaying state, wherein the first subregion is one of at least two subregions obtained by dividing the touch display region;
generating a trigger signal when the display driving signal is loaded to the first subregion of the touch display region, wherein the trigger signal includes information on the first subregion; and
loading a touch driving signal to touch driving electrodes in each of the other one or more subregions except the first subregion of the touch display region based on the trigger signal, so that each of the other one or more regions is in a touch detection state while the first subregion is in the displaying state.

Alternatively, the step of loading a touch driving signal to touch driving electrodes in each of the other one or more subregions except the first subregion of the touch display region based on the trigger signal includes: when the other one or more subregions are a plurality of subregions, loading the touch driving signal to the touch driving electrodes in the plurality of subregions synchronously.

Alternatively, the step of loading a display driving signal to a first subregion of the touch display region so as to enable the first subregion to be in a displaying state includes: loading the display driving signal to the first subregion of the touch display region during a time period for scanning one frame of image, so as to enable the first subregion to be in the displaying state. The step of loading a touch driving signal to touch driving electrodes in each of the other one or more subregions except the first subregion of the touch display region based on the trigger signal so that each of the other one or more regions is in a touch detection state while the first subregion is in the displaying state includes: loading the touch driving signal to the touch driving electrodes in each of the other one or more subregions except the first subregion of the touch display region based on the received trigger signal during the time period for scanning one frame of image, so that each of the other one or more regions is in the touch detection state while the first subregion is in the displaying state.

Alternatively, the method includes: during a first stage of the time period for scanning one frame of image, loading a first display driving signal to the first subregion, so that the first subregion is in the displaying state during the first stage of the time period; generating a first trigger signal when the first display driving signal is loaded to the first subregion, and the first trigger signal includes information on the first subregion; and loading the first touch driving signal to the touch driving electrodes in the second subregion based on the first trigger signal, so that the second subregion is in the touch detection state while the first subregion is in the displaying state; during a second stage of the time period for scanning one frame of image, loading a second display driving signal to the second subregion, so that the second subregion is in the displaying state during the second stage of the time period; generating a second trigger signal when the second display driving signal is loaded to the second subregion, wherein the second trigger signal includes information on the second subregion; and loading the second touch driving signal to the touch driving electrodes in the first subregion based on the second trigger signal, so that the first subregion is in the touch detection state while the second subregion is in the displaying state, wherein the first stage of the time period and the second stage of the time period adjoin each other and together form the time period for scanning one frame of image.

### (3) ADVANTAGEOUS EFFECTS

The following advantageous effects may be obtained by at least one of the above technical solutions provided by the embodiments of the present disclosure:

it can be seen from above that, the in-cell touch display apparatus and the method for driving the same according to the present disclosure, are implemented by including: a display driving module, configured to load a display driving signal to a first subregion of the touch display region, so as to enable the first subregion to be in a displaying state; a trigger signal generation module, configured to generate a trigger signal when the display driving module loads the display driving signal to the first subregion of the touch display region; and a touch driving signal generation module, configured to load a touch driving signal to touch driving electrodes in each of the other one or more subregions except the first subregion of the touch display region based on the received trigger signal, so that each of the other one or more regions is in a touch detection state while the first subregion is in the displaying state. As a result, the problem of insufficient time period for the touch detection of the large-scaled touch display screen may be solved, and the touch detection may operate properly while the display quality of the touch display apparatus is ensured.

### BRIEF DESCRIPTION OF THE DRAWINGS

In order to illustrate the technical solutions of the present disclosure or the related art in a clearer manner, the drawings desired for the embodiments will be described briefly hereinafter. Obviously, the following drawings merely relate to some embodiments of the present disclosure, and based on these drawings, a person skilled in the art may obtain the other drawings without any creative effort.
Fig. 1 illustrates a first diagram for a structure of an in-cell touch display apparatus according to the embodiment of the present disclosure;
Fig.2 illustrates a second diagram for the structure of the in-cell touch display apparatus according to the embodiment of the present disclosure;
Fig.3 illustrates a structure of a display driving module in the in-cell touch display apparatus according to the embodiment of the present disclosure;
Fig.4 illustrates a third diagram for the structure of the in-cell touch display apparatus according to the embodiment of the present disclosure;
Fig.5 illustrates a structure of a second substrate in the in-cell touch display apparatus according to the embodiment of the present disclosure;
Fig.6 illustrates a fourth diagram for the structure of the in-cell touch display apparatus according to the embodiment of the present disclosure;
Fig.7 illustrates a fifth diagram for the structure of the in-cell touch display apparatus according to the embodiment of the present disclosure; and
Fig.8 illustrates a flow chart of a method for driving the in-cell touch display device according to the embodiment of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure.

In order to make the objects, the technical solutions and the advantages of the present disclosure more apparent, some technical solutions of the present disclosure will be described hereinafter in a clear and complete manner in conjunction with the drawings and embodiments. Obviously, the following embodiments are merely a part of, rather than all of, the embodiments of the present disclosure, and based on these embodiments, a person skilled in the art may obtain the other embodiments, which also fall within the scope of the present disclosure.

Unless otherwise defined, any technical or scientific term used herein shall have the common meaning understood by a person of ordinary skills. Such words as "first" and "second" used in the specification and claims are merely used to differentiate different components rather than to represent any order, number or importance. Similarly, such words as "one" or "a/an" are merely used to represent the existence of at least one member, rather than to limit the number thereof. Such words as "connect" or "connected to" may include electrical connection, direct or indirect, rather than to be limited to physical or mechanical connection. Such words as "on", "under", "left" and "right" are merely used to represent relative position relationship, and when an absolute position of the object is changed, the relative position relationship will be changed too.

Hereinafter, it will be discussed in details associated with figures and embodiments for further clarifying objects, technical solutions and advantages of the present disclosure.

The following embodiments are explained by taking the in-cell touch display apparatus as an example. Those skilled in the art may understand that the technical solutions of the present disclosure may also be applied to other types of display apparatus, and the present disclosure is not limited thereto.

In this embodiment, it is provided an in-cell touch display apparatus including a touch display region 4.

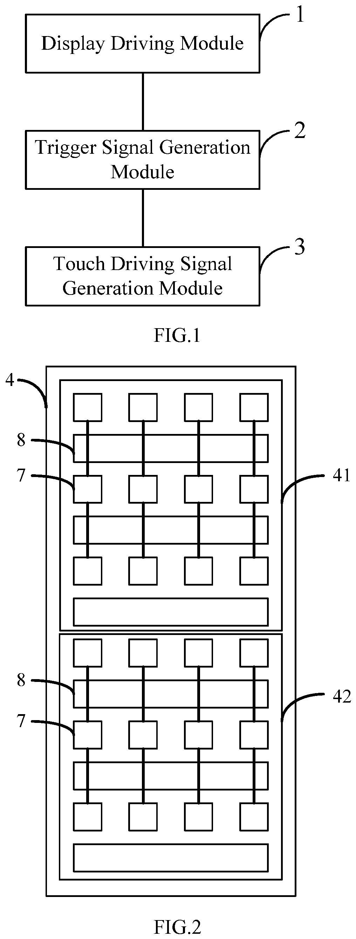

As illustrated in Fig. 1, the in-cell touch display apparatus may further includes:
a display driving module 1, configured to load a display driving signal to a first subregion of the touch display region, so as to enable the first subregion to be in a displaying state, wherein the first subregion is one of at least two subregions obtained by dividing the touch display region;
a trigger signal generation module 2, configured to generate a trigger signal when the display driving module 1 loads the display driving signal to the first subregion of the touch display region, wherein the trigger signal includes information on the first subregion; and
a touch driving signal generation module 3, configured to load a touch driving signal to touch driving electrodes 7 in each of the other one or more subregions except the first subregion of the touch display region based on the received trigger signal, so that each of the other one or more regions of the touch display region is in a touch detection state while the first subregion is in the displaying state.

In this embodiment of the present disclosure, the touch display region 4 included in the in-cell touch display apparatus may be divided into a plurality of subregions, for example, subregions 41 and 42 as illustrated in Fig.2, or more subregions in other embodiments.

Then, in the embodiment of the present disclosure, when a subregion (for example, the subregion 41) of the touch display region 4 displays a corresponding image under the driving of the display driving signal transmitted by the display driving module 1, i.e. in a displaying state, each of other subregions (for example, the subregion 42) of the touch display region 4 may detect whether there is a touch on this subregion under the control of the touch driving signal transmitted by the touch driving signal generation module 3, i.e. in a touch detection state, instead of displaying the corresponding image. As a result, different subregions of the touch display region 4 may be in the displaying state or in the touch detection state respectively at the same time, so as to implement the image displaying and the touch detection synchronously in different subregions of the touch display region 4.

Since the image displaying and the touch detection may be implemented synchronously in different subregions of the touch display region 4 in the in-cell touch display apparatus provided by the embodiment of the present disclosure, the negative effect on the time period for the touch detection caused by the size of the touch display screen may be eliminated, and the technical problem of insufficient time period for the detection on the large-scaled touch display screen is solved. Thus, the touch detection may operate properly while the display quality of the touch display apparatus is ensured, and the image displaying and the touch detection may be associated in a preferred manner.

Furthermore, a driving manner of implementing the display driving and the touch detection synchronously is adopted in this embodiment of the present disclosure, and thus, compared with the traditional driving manner of V-Blank, the time duration for the touch detection is actually increased. Not only the in-cell touch display apparatus may implement the touch detection function properly, but also the frequency for transmitting the touch detection signal may be reduced, the internal noise of the touch display apparatus is reduced, and the image display quality of the touch display apparatus is improved.

In the specific embodiment, when there is a plurality of subregions in the touch detection state, the touch driving signal generation apparatus 3 may load the touch detection signal to the touch detection electrodes 7 in the plurality of subregions in the touch detection state synchronously, so that the plurality of subregions in the touch detection state may implement the touch detection synchronously. Since an area required for the touch detection of each subregion is less than an overall area of the touch display area, the time period for touch detection in the subregion is effectively extended under the condition that the area of the touch display region 1 required for the touch detection is reduced, and the proper operation of the touch detection function is implemented. In addition, the frequency of transmitting the touch detection signal (for example, the touch sensing signal, the touch driving signal and etc) is further reduced, the internal noise of the touch display apparatus is reduced, and the display quality is improved.

More specifically, in an embodiment of the present disclosure, the display driving module 1 loads the display driving signal to the first subregion of the touch display region 4 during a time period for scanning one frame of image, so as to enable the first subregion to be in the displaying state.

The touch driving signal generation module 3 loads the touch driving signal to the touch driving electrodes 7 in each of the other one or more subregions except the first subregion of the touch display region 4 based on the received trigger signal during the time period for scanning one frame of image, so that each of the other one or more regions is in the touch detection state while the first subregion is in the displaying state.

In an example as illustrated in Fig.2, the synchronous implementation of the display driving and the touch detection in different subregions of the in-cell touch display apparatus according to the embodiment of the present disclosure is briefly described.

In Fig.2, during the first stage within the time period for scanning one frame of image, if it is required for the target subregion 41 to display the corresponding image, i.e. to be in the displaying state, the subregion 42 may be used to detect the touch, i.e. in the touch detection state. Then, the display driving module 1 may load the display driving signal to the subregion 41, so as to enable the subregion 41 to be in the displaying state. The trigger signal generation module 2 generates a trigger signal when the display driving module 1 loads the display driving signal to the subregion 41, so that the touch signal generation apparatus 3 loads the touch driving signal to other subregions (for example, the subregion 42), and the touch signal generation module 2 transmits the touch signal to the touch driving signal generation apparatus 3, wherein the trigger signal includes information on the subregion (for example, the subregion 41) which is currently in the displaying state. Upon receiving the trigger signal, the trigger driving signal generation apparatus 3 obtains the information on the subregion currently in the displaying state (for example, the information indicating that the subregion 41 is currently in the displaying state), and then loads the touch detection signal to the touch driving electrode 7 in the other subregions of the touch display region 4 (for example, the subregion 42), so as to enable the other subregions (for example, the subregion 42) to be in the touch detection state. As a result, during the first stage of the time period, the different subregions (for example, the subregion 41 and the subregion 42) of the touch display region 4 are in the displaying state or the touch detection state respectively and synchronously.

The gate lines are scanned line by line, i.e. in the touch display region 4 as illustrated in Fig.2, the subregion 42 will be enabled to be in the displaying state at an end of the condition in which the subregion 41 is in the displaying state. Thus, during a second stage within the time period for scanning one frame of image, the display driving module 1 may load the display driving signal to the subregion 42, so as to enable the subregion 42 to be in the displaying state. The trigger signal generation module 2 generates a trigger signal when the display driving module 1 loads the display driving signal to the subregion 42, and transmits the touch signal to the touch driving signal generation apparatus 3, wherein the trigger signal includes information on the subregion (for example, the subregion 42) currently in the displaying state. Upon receiving the trigger signal, the trigger driving signal generation apparatus 3 obtains the information on the subregion currently in the displaying state (for example, the information indicating that the subregion 42 is currently in the displaying state), and then loads the touch detection signal to the touch driving electrode 7 in the other subregions of the touch display region 4 (for example, the subregion 41), so as to enable the other subregions (for example, the subregion 41) to be in the touch detection state. As a result, during the second stage of the time period, the different subregions (for example, the subregion 41 and the subregion 42) of the touch display region 4 are in the displaying state or the touch detection state respectively and synchronously.

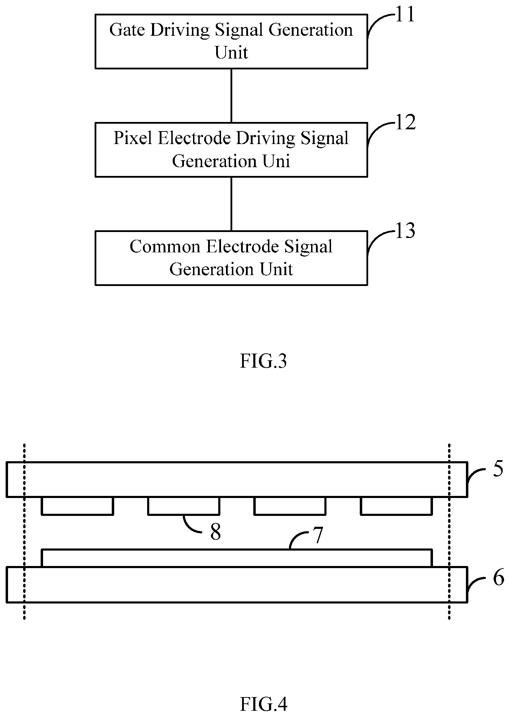

In an embodiment of the present disclosure, the in-cell touch display apparatus may includes display-driving related devices, such as a plurality of gate lines, pixel electrodes and a common electrode (not shown). As illustrated in Fig.3, in order to drive the above display device, the display driving module 1 may include at least one of the following devices:
the gate driving signal generation unit 11, configured to generate a gate driving signal, and load the generated gate driving signal to a corresponding gate line, wherein the gate driving signal generation unit 11 is connected to the corresponding gate line;
the pixel electrode driving signal generation unit 12, configured to generate a pixel electrode driving signal, and load the generated pixel electrode driving signal to a corresponding pixel electrode, wherein the pixel electrode driving signal generation unit 12 is connected to the corresponding pixel electrode; and
the common electrode signal generation unit 13, configured to generate a common electrode signal, and load the generated common electrode signal to the common electrode, wherein the common electrode signal generation unit 13 is connected to the common electrode.

Furthermore, if the in-cell touch display apparatus further includes other display driving related devices, the embodiment of the present disclosure may include other function units for generating corresponding display driving signals accordingly.

As illustrated in Fig.4, the in-cell touch display apparatus may include a first substrate 5 and a second substrate 6 arranged to form a cell.

The touch sensing electrodes 8 may be arranged on the first substrate 5, and interact with the touch driving electrodes 7 to implement the touch detection.

The touch driving electrodes 7 may be arranged on the second substrate 6, and intersected with and insulated from the touch sensing electrodes 8.

As illustrated in Fig.2, the touch driving electrodes 7 include a plurality of electrodes arranged in a longitudinal direction and in parallel, and each of the plurality of electrodes consists of a plurality of block-shaped electrodes connected electrically.

As illustrated in Fig.2, the touch sensing electrodes 8 may include a plurality of strip-shaped electrodes arranged in a horizontal direction and in parallel.

Furthermore, in an embodiment of the present disclosure, the display driving devices such as the gate lines, the pixel electrodes and the common electrode may be arranged on the second substrate 6.

More particular, the first substrate 5 may be a color filter substrate. More particular, the second substrate 6 may be an array substrate.

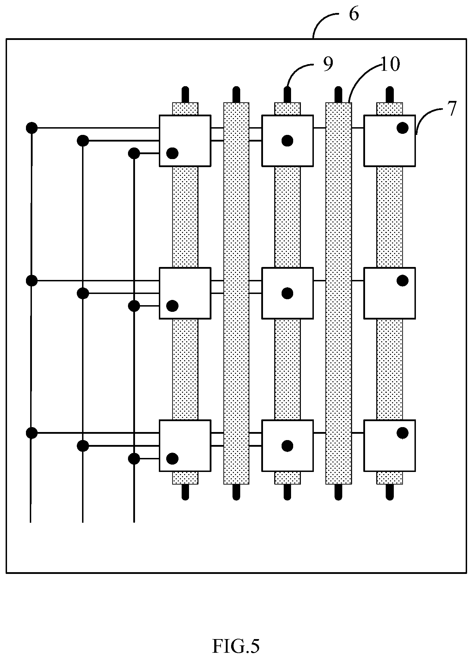

Since the display driving and the touch detection may be implemented synchronously in the in-cell touch display apparatus, there may be a case that the touch driving electrodes 7 are loaded with the touch driving signal while the data lines 9 on the second substrate 6 are loaded with the data signals. In this case, the data signals transmitted by the data lines 9 on the second substrate 6 may be adversely affected. In order to avoid the adverse affections between the touch driving signals and the data signals, as illustrated in Fig.5, shielding layers 10 may be arranged between the data lines 9 and the touch driving electrodes 7 on the second substrate 6, so that the interferences between the touch driving signals and the data signals may be shielded. Thus, the internal noises of the in-cell touch display device are reduced, and the display quality of the touch display apparatus is improved.

In an embodiment, a whole area for the shielding layer 10 on the second substrate 6 may be coated with a corresponding material as the shielding layer 10, so as to achieve a better shielding result.

Furthermore, in order to save material and avoid the shielding of the touch detecting signals, in an embodiment as illustrated in Fig.5, the shielding layer 10 may include a plurality of stripe patterns corresponding to locations of the data lines 9, and one data line 9 may correspond to at least one stripe pattern of the shielding layer 10.

As illustrated in Fig.5, in an embodiment, the data lines 9 and the stripe patterns of the shielding layer 10 may be in one-to-one correspondence. Thus, a projection area of each data line 9 on the second substrate 6 may be totally within a projection area of one of the strip patterns of the shielding layer 10 corresponding to the data line 9 on the second substrate 6. In other words, the strip pattern of shielding layer 10 may totally cover the corresponding data line 9, so that the adverse affections of the touch driving signals and the data signals on each other may be avoided.

In an embodiment, a material of the shielding layer 10 may be a transparent and conductive material, for example the indium tin oxide (ITO), so as to avoid the adverse affection on the display of the touch display device.

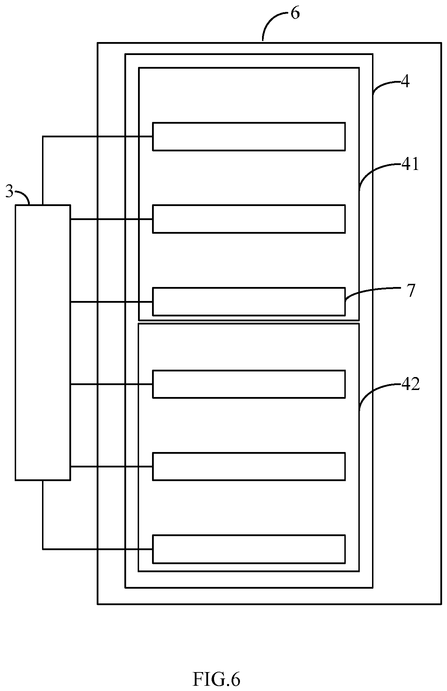

In an embodiment, as illustrated in Fig.6, the touch driving electrodes 7 in different subregions may be connected to a same touch driving signal generation apparatus 3. Thus, the same touch driving signal generation apparatus 3 may load the touch sensing signal to the touch driving electrodes 7 in the different subregions in the touch detection state synchronously or at predetermined time intervals.

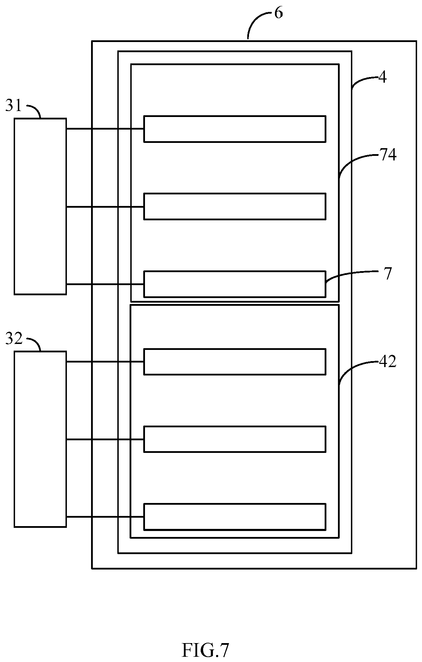

Alternatively, in another embodiment as illustrated in Fig.7, the touch driving electrodes 7 in different subregions may be connected to different touch driving signal generation modules 3 (as indicated by references 31, 32). For example, the touch driving electrode 7 in one subregion may be individually connected to (i.e. in one-to-one correspondence to) a touch driving signal generation apparatus 3. Thus, the touch driving signal generation apparatus 3 may individually load the touch driving signal to the touch sensing electrode 7 in the corresponding subregion which is in the touch detection state. Furthermore, a plurality of touch driving signal generation apparatus 3 may respectively load the touch sensing signal to the touch sensing electrodes 7 in the corresponding subregions which are in the touch detection state synchronously or at the predetermined time intervals.

Alternatively, in another embodiment of the present disclosure, one touch signal generation apparatus 3 may be correspondingly connected to the touch driving electrodes 7 in two or more subregions.

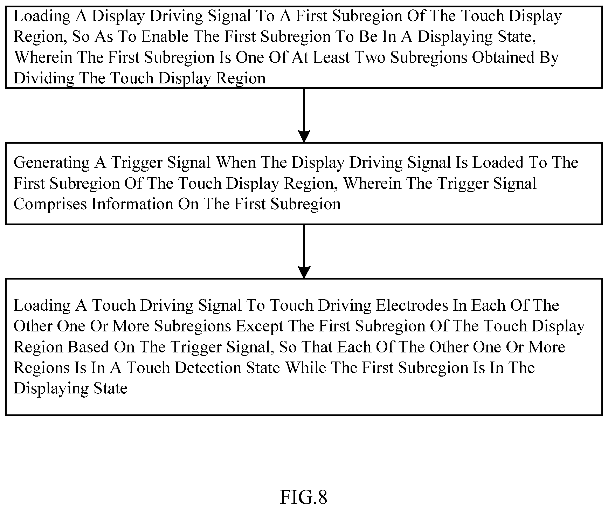

In an embodiment, it is further provided a method for driving the in-cell touch display apparatus. As illustrated in Fig.8, the method includes steps of:
loading a display driving signal to a first subregion of the touch display region 4, so as to enable the first subregion to be in a displaying state, wherein the first subregion is one of at least two subregions obtained by dividing the touch display region 4;
generating a trigger signal when the display driving signal is loaded to the first subregion of the touch display region, wherein the trigger signal includes information on the first subregion; and
loading a touch driving signal to touch driving electrodes 7 in each of the other one or more subregions except the first subregion of the touch display region 4 based on the trigger signal, so that each of the other one or more regions is in a touch detection state while the first subregion is in the displaying state.

In an embodiment, the step of loading a touch driving signal to touch driving electrodes 7 in each of the other one or more subregions except the first subregion of the touch display region 4 based on the trigger signal may include:
when the other one or more subregions are a plurality of subregions, loading the touch driving signal to the touch driving electrodes 7 in the plurality of subregions synchronously.

In an embodiment, the step of loading a display driving signal to a first subregion of the touch display region 4 so as to enable the first subregion to be in a displaying state may include:
loading the display driving signal to the first subregion of the touch display region 4 during a time period for scanning one frame of image, so as to enable the first subregion to be in the displaying state.

The step of loading a touch driving signal to touch driving electrodes 7 in each of the other one or more subregions except the first subregion of the touch display region 4 based on the trigger signal so that each of the other one or more regions is in a touch detection state while the first subregion is in the displaying state may include:
loading the touch driving signal to the touch driving electrodes 7 in each of the other one or more subregions except the first subregion of the touch display region 4 based on the received trigger signal during the time period for scanning one frame of image, so that each of the other one or more regions is in the touch detection state while the first subregion is in the displaying state.

In an embodiment, the method for driving the in-cell touch display apparatus includes, during a first stage of the time period for scanning one frame of image,
loading a first display driving signal to the first subregion, so that the first subregion is in the displaying state during the first stage of the time period;
generating a first trigger signal when the first display driving signal is loaded to the first subregion, and the first trigger signal includes information on the first subregion; and
loading the first touch driving signal to the touch driving electrodes 7 in the second subregion based on the first trigger signal, so that the second subregion is in the touch detection state while the first subregion is in the displaying state.

The method for driving the in-cell touch display apparatus further includes, during a second stage of the time period for scanning one frame of image,
loading a second display driving signal to the second subregion, so that the second subregion is in the displaying state during the second stage of the time period;
generating a second trigger signal when the second display driving signal is loaded to the second subregion, and the second trigger signal includes information on the second subregion; and
loading the second touch driving signal to the touch driving electrodes 7 in the first subregion based on the second trigger signal, so that the first subregion is in the touch detection state while the second subregion is in the displaying state.

In an embodiment, the first stage of the time period and the second period adjoin each other within the time period for scanning one frame of image.

In an embodiment of the present disclosure, it is further provided an electrical apparatus including at least one of the above display apparatuses. The structure and operation of the display apparatus are same as those in the above embodiment, which are omitted herein. The structures of other parts of the electronic apparatus may be referred to the prior arts, which are omitted herein. The electronic apparatus may be a LCD panel, an electronic paper, a LCD TV, a LCD monitor, a digital photo frame, a mobile phone, a tablet computer, or any other product or component having a displaying function.

It can be seen from above that, in the present disclosure, the in-cell touch display apparatus and the method for driving the same are implemented by including: a display driving module, configured to load a display driving signal to a first subregion of the touch display region, so as to enable the first subregion to be in a displaying state; a trigger signal generation module, configured to generate a trigger signal when the display driving module loads the display driving signal to the first subregion of the touch display region; and a touch driving signal generation module, configured to load a touch driving signal to touch driving electrodes in each of the other one or more subregions except the first subregion of the touch display region based on the received trigger signal, so that each of the other one or more regions is in a touch detection state while the first subregion is in the displaying state. As a result, the problem of insufficient time period for the touch detection of the large-scaled touch display screen may be solved, and the touch detection may operate properly while the display quality of the touch display apparatus is ensured.

The optional embodiments of the present disclosure have been discussed. It is appreciated that many modifications and improvements may be made to the present disclosure without departing from the principle of the present disclosure for those skilled in the art. These modifications and improvements should also be deemed to be fallen within the scope of the present disclosure.

## Claims

1. A display apparatus, comprising:
a touch display region;
a display driving module, configured to load a display driving signal to a first subregion of the touch display region, so as to enable the first subregion to be in a displaying state, wherein the first subregion is one of at least two subregions obtained by dividing the touch display region;
a trigger signal generation module, configured to generate a trigger signal when the display driving module loads the display driving signal to the first subregion of the touch display region, wherein the trigger signal comprises information on the first subregion; and
a touch driving signal generation module, configured to load a touch driving signal to touch driving electrodes in each of the other one or more subregions except the first subregion of the touch display region based on the received trigger signal, so that each of the other one or more regions is in a touch detection state while the first subregion is in the displaying state.

2. The display apparatus according to claim 1, wherein
the display driving module loads the display driving signal to the first subregion of the touch display region during a time period for scanning one frame of image, so as to enable the first subregion to be in the displaying state; and
the touch driving signal generation module loads the touch driving signal to the touch driving electrodes in each of the other one or more subregions except the first subregion of the touch display region based on the received trigger signal during the time period for scanning one frame of image, so that each of the other one or more regions is in the touch detection state while the first subregion is in the displaying state.

3. The display apparatus according to claim 1 or 2, wherein
the touch display region comprises a first subregion and a second subregion;
during a first stage of the time period for scanning one frame of image, the display driving module loads a first display driving signal to the first subregion, the trigger signal generation module generates a first touch signal when the display driving module loads the first display driving signal to the first subregion, the first trigger signal comprises information on the first subregion, and the touch driving signal generation module loads the first touch driving signal to the touch driving electrodes in the second subregion based on the received first trigger signal; and
during a second stage of the time period for scanning one frame of image, the display driving module loads a second display driving signal to the second subregion, the trigger signal generation module generates a second touch signal when the display driving module loads the second display driving signal to the second subregion, the second trigger signal comprises information on the second subregion, and the touch driving signal generation module loads the second touch driving signal to the touch driving electrodes in the first subregion based on the received second trigger signal,
wherein the first stage of the time period and the second stage of the time period adjoin each other and together form the time period for scanning one frame of image.

4. The display apparatus according to any one of claims 1-3, wherein when the other one or more subregions are a plurality of subregions, the touch driving signal generation module loads the touch driving signal to the touch driving electrodes in the plurality of subregions synchronously.

5. The display apparatus according to any one of claims 1-4, wherein the display apparatus further comprises a plurality of gate lines, pixel electrodes and a common electrode within the touch display region; and
the display driving module comprises a gate driving signal generation unit, a pixel electrode driving signal generation unit and a common electrode driving signal generation unit, wherein
the gate driving signal generation unit generates a gate driving signal, loads the generated gate driving signal to a corresponding gate line, and is connected to the corresponding gate line;
the pixel electrode driving signal generation unit generates a pixel electrode driving signal, loads the generated pixel electrode driving signal to a corresponding pixel electrode, and is connected to the corresponding pixel electrode; and
the common electrode signal generation unit generates a common electrode signal, loads the generated common electrode signal to the common electrode, and is connected to the common electrode.

6. The display apparatus according to any one of claims 1-5, comprising:
a first substrate;
a second substrate; and
touch sensing electrodes, arranged on the first substrate, and configured to interact with the touch driving electrodes to implement the touch detection,
wherein, the touch driving electrodes are arranged on the second substrate, and intersected with and insulated from the touch sensing electrodes.

7. The display apparatus according to claim 6, wherein the touch sensing electrodes comprise a plurality of strip-shaped electrodes arranged in a horizontal direction and in parallel; and
the touch driving electrodes comprise a plurality of electrodes arranged in a longitudinal direction and in parallel, each of which consists of a plurality of block-shaped electrodes connected electrically.

8. The display apparatus according to claim 6 or 7, wherein all of the gate lines, the pixel electrodes and the common electrode are arranged on the second substrate.

9. The pixel circuit according to any one of claims 6-8, wherein the second substrate further comprises:
data lines; and
a shielding layer, arranged between the touch driving electrodes and the data lines.

10. The display apparatus according to any one of claims 1-9, wherein the touch driving electrodes in different subregions are connected to a same touch driving signal generation module.

11. The display apparatus according to any one of claims 1-9, wherein the touch driving electrodes in different subregions are connected to different touch driving signal generation modules.

12. The display apparatus according to any one of claims 1-11, wherein the display apparatus is an in-cell touch display apparatus.

13. An electrical apparatus, comprising the display apparatus according to any one of claims 1-12.

14. A method for driving a display apparatus comprising a touch display region, comprising:
loading a display driving signal to a first subregion of the touch display region, so as to enable the first subregion to be in a displaying state, wherein the first subregion is one of at least two subregions obtained by dividing the touch display region;
generating a trigger signal when the display driving signal is loaded to the first subregion of the touch display region, wherein the trigger signal comprises information on the first subregion; and
loading a touch driving signal to touch driving electrodes in each of the other one or more subregions except the first subregion of the touch display region based on the trigger signal, so that each of the other one or more regions is in a touch detection state while the first subregion is in the displaying state.

15. The method according to claim 14, wherein the step of loading a touch driving signal to touch driving electrodes in each of the other one or more subregions except the first subregion of the touch display region based on the trigger signal comprises:
when the other one or more subregions are a plurality of subregions, loading the touch driving signal to the touch driving electrodes in the plurality of subregions synchronously.

16. The method according to claim 14 or 15, the step of loading a display driving signal to a first subregion of the touch display region so as to enable the first subregion to be in a displaying state comprises:
loading the display driving signal to the first subregion of the touch display region during a time period for scanning one frame of image, so as to enable the first subregion to be in the displaying state.

17. The method according to any one of claims 14-16, wherein the step of loading a touch driving signal to touch driving electrodes in each of the other one or more subregions except the first subregion of the touch display region based on the trigger signal so that each of the other one or more regions is in a touch detection state while the first subregion is in the displaying state comprises:
loading the touch driving signal to the touch driving electrodes in each of the other one or more subregions except the first subregion of the touch display region based on the received trigger signal during the time period for scanning one frame of image, so that each of the other one or more regions is in the touch detection state while the first subregion is in the displaying state.

18. The method according to any one of claims 14-17, wherein
during a first stage of the time period for scanning one frame of image, the method comprises:
loading a first display driving signal to the first subregion, so that the first subregion is in the displaying state during the first stage;
generating a first trigger signal when the first display driving signal is loaded to the first subregion, wherein the first trigger signal comprises information on the first subregion; and
loading the first touch driving signal to the touch driving electrodes in the second subregion based on the first trigger signal, so that the second subregion is in the touch detection state while the first subregion is in the displaying state;
during a second stage of the time period for scanning one frame of image, the method comprises:
loading a second display driving signal to the second subregion, so that the second subregion is in the displaying state during the second stage;
generating a second trigger signal when the second display driving signal is loaded to the second subregion, wherein the second trigger signal comprises information on the second subregion; and
loading the second touch driving signal to the touch driving electrodes in the first subregion based on the second trigger signal, so that the first subregion is in the touch detection state while the second subregion is in the displaying state,
wherein the first stage of the time period and the second stage of the time period adjoin each other and together form the time period for scanning one frame of image.

19. The method according to any one of claims 14-18, wherein the display apparatus is an in-cell touch display apparatus.
